(19) Europäisches Patentamt
European Patent Office
Office européen des brevets

(11) **EP 1 980 463 B1**

(12) **EUROPEAN PATENT SPECIFICATION**

(45) Date of publication and mention
of the grant of the patent:
**19.06.2013 Bulletin 2013/25**

(51) Int Cl.:
***B60T 8/1755*** (2006.01)   ***B60T 8/172*** (2006.01)
***B60W 30/04*** (2006.01)   ***B60R 21/0132*** (2006.01)

(21) Application number: **06797647.2**

(22) Date of filing: **07.09.2006**

(86) International application number:
**PCT/JP2006/317790**

(87) International publication number:
**WO 2007/088653 (09.08.2007 Gazette 2007/32)**

(54) **DEVICE FOR JUDGING ROLLOVER RISK OF VEHICLE**

VORRICHTUNG ZUR BEURTEILUNG VON ÜBERSCHLAGRISIKO FÜR EIN FAHRZEUG

DISPOSITIF POUR JUGER DU RISQUE DE CAPOTAGE D'UN VÉHICULE

(84) Designated Contracting States:
**DE FR GB**

(30) Priority: **02.02.2006   JP 2006026155**
**31.03.2006   JP 2006099281**

(43) Date of publication of application:
**15.10.2008 Bulletin 2008/42**

(73) Proprietor: **Isuzu Motors Limited**
**Tokyo 140-8722 (JP)**

(72) Inventors:
• **IWAMA, Toshihiko**
**Fujisawa-shi, Kanagawa, 252-8501 (JP)**
• **FURIHATA, Kenichi**
**Fujisawa-shi, Kanagawa, 252-8501 (JP)**
• **TAKAHASHI, Wataru**
**Fujisawa-shi, Kanagawa, 252-8501 (JP)**
• **SUZUKI, Teruhiko**
**Fujisawa-shi, Kanagawa, 252-8501 (JP)**
• **SATO, Takahiro**
**Fujisawa-shi, Kanagawa, 252-8501 (JP)**

(74) Representative: **Appelt, Christian W.**
**Boehmert & Boehmert**
**Pettenkoferstrasse 20-22**
**80336 München (DE)**

(56) References cited:
EP-A2- 1 219 500       JP-A- 07 164 985
JP-A- 2001 071 845     JP-A- 2001 260 784
JP-A- 2001 260 786     JP-A- 2005 022 553
JP-A- 2006 298 209     US-A1- 2004 002 802
US-A1- 2005 004 730    US-B1- 6 438 463
US-B1- 6 843 538

**Description**

Technical Field

The present invention relates to a vehicle rollover danger level determination apparatus, and in particular to an apparatus which determines a rollover danger level (dangerous degree) of a vehicle based on a roll angle and a roll angular velocity of the vehicle while running.

Background Art

For determining a rollover danger level of a vehicle based on a roll angle and a roll angular velocity of the vehicle while running, conventional examples as indicated below are known in the art:

Conventional example [1]

A rollover occurrence determining threshold line separating a rollover region from a non-rollover region is set on a two-dimensional map with a roll angular velocity and a roll angle of a vehicle, in which upon determining the presence or absence of a possibility of a vehicle rollover occurrence from a position of the two-dimensional map determined by a roll angular velocity detected and a roll angle detected, the air pressures of the wheels are detected and the rollover occurrence determining threshold line is shifted according to the air pressures detected, thereby accurately detecting the possibility of the vehicle rollover occurrence (see, e.g. patent document 1);

Conventional example [2]:

In a vehicle rollover judging method in which a threshold line is set on a two-dimensional map with a roll angle and a roll angular velocity of a vehicle as parameters; when the history line of the actual roll angle and roll angular velocity of the vehicle crosses the threshold line from a non-rollover area on origin side to a rollover area on anti-origin side, it is judged that there is a possibility of rollover of the vehicle, the two-dimensional map is provided with four quadrants combining positive and negative roll angles as well as positive and negative roll angular velocities; when the history line extends over at least three quadrants and the distance from the origin of the history line increases, the threshold line is shifted onto the origin side, thereby improving the judgment precision of the presence or absence of a possibility of the vehicle rollover (see, e.g. patent document 2).

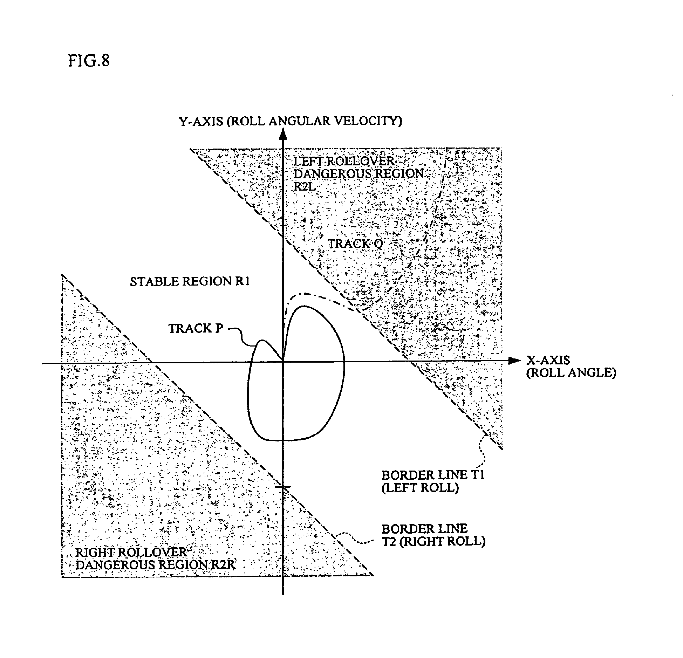

Fig.8 shows one example of a two-dimensional map for judging or determining a possibility of rollover, in which the above conventional examples [1] and [2] also use such a two-dimensional map as shown in Fig.8. Hereinafter, a judging method of a possibility of rollover by using the two-dimensional map will be described referring to Fig.8.

In Fig.8, an X-axis calibrates a roll angle and an Y-axis calibrates a roll angular velocity, in which a left rollover dangerous region R2L and a right rollover dangerous region R2R (hereinafter, occasionally represented by a reference numeral R2) are separated from a stable region R1 sandwiched by the left rollover dangerous region R2L and the right rollover dangerous region R2R by two border lines T1 and T2 as shown where the left direction is regarded as being positive.

In Fig.8, a track P shown by a solid line indicates a case where a vehicle does not roll over, and a track Q shown by alternate long and short dashed lines indicates a case where a vehicle rolls over.

In this two-dimensional map, it is determined that when a track of the roll angle and the roll angular velocity as shown by the track Q crosses the border line T1 from the stable region R1 toward the left rollover dangerous region R2L, there is a danger of rollover.

On the other hand, it is determined that when the roll angular velocity and the roll angle are both small so that the track always resides in the stable region R1 as shown by the track P, there is a low possibility of rollover.

Furthermore, the determination timing can be adjusted depending on a setting way of the border lines T1 and T2 used for the determination.

While a rollover limit of a vehicle varies with the centroid height of a load, with a two-dimensional map of a roll angle and a roll angular velocity of a vehicle as in the above conventional examples [1] and [2] a possibility of a vehicle rollover is determined based on the roll angle and roll angular velocity according to the running of a vehicle, so that an accurate determination is made possible irrespective of the centroid height of a load.

Regarding the two-dimensional map, for example the above noted conventional example [1] does not set the left rollover dangerous region as a vehicle rollover does not occur at the occurrence of a roll angular velocity in the reverse direction of the roll angle for the second and fourth quadrants, whereas the left rollover dangerous region may also be set for the second and fourth quadrants as shown in Fig.8 because a rollover dangerousness does not disappear even though the sign of the roll angular velocity is different when the roll angle is high to some extent.

Conventional example [3]:

There has been proposed another technology for preventing a vehicle rollover that performs a breaking control according to a roll state of a vehicle, thereby setting target decelerations of three stages to suppress the rollover (see, e.g. patent document 3)

> [Patent document 1] Japanese patent application laid-open No.2005-271697
> [Patent document 2] Japanese patent application laid-open No.2001-71845
> [Patent document 3] Japanese patent application laid-open No.11-11272

US 6,438,463 B1 discloses a process for determining lateral overturning of a vehicle. A possible lateral overturning (rollover) of the vehicle is related to a point when a hysteresis line specified by a roll angle and a roll angular velocity traverses a threshold value line (borderline).

Disclosure of the Invention

Either of the above noted conventional examples [1] and [2] sets a rollover dangerous region and a stable region on a two-dimensional map with a roll angular velocity and a roll angle of a vehicle and properly shifts a border line separating these regions, thereby determining the presence or absence of a rollover dangerousness of a vehicle.

However, the above conventional examples [1] and [2] did not take account of a rollover danger level indicating how high the rollover dangerousness is even though determining that there is a danger of rollover.

If such a conventional technology is adapted to obtain a proper rollover danger level according to a vehicle state, it is conceived that dangerous regions of plural stages are set on the above noted two-dimensional map according to dangerous states of plural stages. In this case, however, it is necessary to increase the stages of the dangerous states or increase the number of regions in order to more precisely determine the danger level, so that a larger storage capacity is impractically required as the number of regions increases.

On the other hand, the conventional example [3] sets danger levels of three stages for preventing a vehicle rollover, and sets target decelerations of three stages based on the levels for deceleration controls.

In this case, the danger levels of three stages comprise a level at which no rollover occurs regardless of the centroid height of a vehicle, a level at which a rollover may occur depending on the centroid height of a vehicle, and a level at which a rollover may occur regardless of the centroid height of a vehicle, enabling a stepwise control, but this conventional technology fails to perform a continuous control by obtaining a rollover danger level continuously varying according to the running state of a vehicle regardless of the centroid height.

Accordingly, it is an object of the present invention to provide a vehicle rollover danger level determination apparatus which enables a rollover danger level to be continuously determined according to a vehicle state without requiring a large storage capacity.

This problem is solved by an apparatus according to claim 1. Claims 2 to 8 refer to specifically advantageous realizations of the subject matter of claim 1.

[1] In order to achieve the above mentioned object, a vehicle rollover danger level determination apparatus according to one aspect of the present invention comprises a roll angle detector detecting a roll angle of a vehicle; a roll angular velocity detector detecting a roll angular velocity of the vehicle; a distance calculator calculating a distance from a border line which respectively separates a rollover dangerous region from a stable region set on a two-dimensional map showing a relationship between a roll angle and a roll angular velocity of a vehicle to a point specified on the two-dimensional map by the roll angle and the roll angular velocity detected, and outputting the distance attached with a sign depending on whether the point resides on a side of the rollover dangerous region or on a side of the stable region with respect to the border line; and a rollover danger level outputting portion calculating a rollover danger level based on the distance attached with the sign to be outputted.

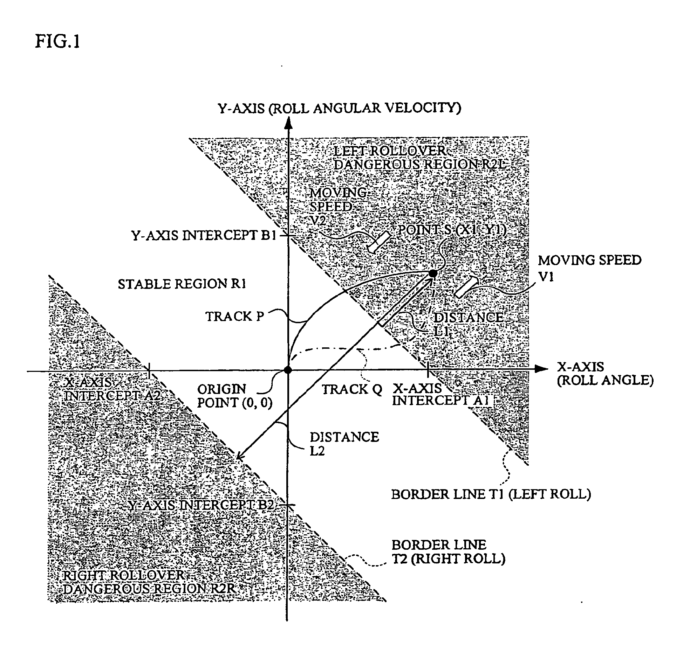

Namely, according to the present invention, by using a two-dimensional map as shown in Fig.1, the presence or absence of a rollover dangerousness of a vehicle and a rollover danger level are determined.

In Fig.1, the X-axis calibrates a roll angle and the Y-axis calibrates a roll angular velocity, in which as an example of border lines separating rollover dangerous regions from a stable region set on the two-dimensional map showing the relationship between a roll angle and a roll angular velocity of a vehicle, a left rollover dangerous region R2L and a right rollover dangerous region R2R are sectioned from a stable region R1 sandwiched by those rollover dangerous regions R2L and R2R, by two border lines T1 and T2.

Hereinafter, a case of a left rollover will be described as an example, in which according to the present invention, the distance calculator calculates a distance L1 from the border line T1 to a point S specified on the two-dimensional map by the roll angle of the vehicle detected by the roll angle detector and the roll angular velocity detected by the roll angular velocity detector, and outputs the distance L1 attached with a sign depending on whether the point S specified on the two-dimensional map resides on a side of the rollover dangerous region or on a side of the stable region with respect to the border line T1.

In this case, for example, assuming that the distance at the time when the point S is positioned on the side of the roll dangerous region with reference to the border line is positive while the distance at the time when the point S is positioned on the side of the stable region is negative, the distance on the side of the left rollover dangerous region R2L is positive on the basis of the border line T1 while the distance on the side of the right rollover dangerous region R2R is positive on the basis of the border line T2, so that in either case the distance on the side of the stable region R1 is negative. Therefore, the point S of the example shown is positioned on the side of the left rollover dangerous region R2L with reference to the border line T1, so that the distance calculator outputs the distance L1 having a positive value.

Then, the rollover danger level outputting portion calculates and outputs a rollover danger level based on the distance L1 having a positive value.

Accordingly, in this example shown, since the sign of the distance L1 is positive, there is a dangerousness of a vehicle rolling over to the left, in which case the rollover danger level is calculated with the distance L1 and outputted.

Thus, the rollover danger level that is a scale of a rollover dangerousness based on the distance L1 is calculated, so that without requiring a large storage capacity it becomes possible to continuously determine the rollover danger level according to the vehicle state.

[2] In the above [1], two border lines may be set, on the two-dimensional map, respectively separating the rollover dangerous region corresponding to a left roll or a right roll from the stable region sandwiched between the rollover dangerous regions, wherein the vehicle rollover danger level determination apparatus may further comprise a rollover dangerousness determining portion which determines a presence or absence of a rollover dangerousness of the vehicle based on the sign of the distance; the distance calculator calculates distances from the two border lines at the same time; the rollover dangerousness determining portion determines that with the distances being made first and second distances, when only either one of the first and the second distances has the sign indicating the side of the rollover dangerous region, there is the dangerousness; and the rollover danger level outputting portion calculates the rollover danger level based on the first or the second distance indicating the sign corresponding to the side of the rollover dangerous region.

Namely, the distance calculator calculates distances L1 and L2 from the two border lines T1 and T2 at the same time, in which the rollover dangerousness determining portion determines that when only either one of the first and the second distances has the sign indicating the side of the rollover dangerous region, there is the dangerousness, and the rollover danger level outputting portion calculates the rollover danger level based on the first or the second distance indicating the sign corresponding to the side of the rollover dangerous region.

In the example shown, the sign of the distance L1 is positive while the sign of the distance L2 is negative, so that only the distance L1 is to have the sign indicating the side of the rollover dangerous region, thereby calculating the rollover danger level based on the distance L1.

This excludes a case where the first and the second distances both indicate the sign corresponding to the side of the rollover dangerous region in the absence of concurrent establishment of the rollover dangerousness on both of the left side and the right side, so that the rollover danger level is determined only in a case where only either one of the distances indicates the sign corresponding to the side of the rollover dangerous region.

[3] In the above [2], the vehicle rollover danger level determination apparatus may further comprise an error flag recorder recording an error flag based on a determination result of the rollover dangerousness determining portion which determines that when both of the first and the second distances indicate the sign corresponding to the side of the rollover dangerous region, a system abnormality has occurred.

Namely, as stated above, the rollover dangerousness both on the left side and the right side is not normally established at the same time, so that the rollover dangerousness determining portion determines that when both of the first and the second distances indicate the sign corresponding to the side of the rollover dangerous region, a system abnormality has occurred, and the error flag recorder records an error flag based on the determination result.

This enables a system abnormality to be detected, for example a system manager or so to easily grasp the system abnormality.

[4] In the above [1], the rollover danger level outputting portion may comprise a moving speed calculator calculating a moving speed of the point, in relation to the border line, specified on the two-dimensional map from the distance attached with the sign; and an approaching danger level calculator calculating a danger level of the point approaching or progressing in the rollover dangerous region and moving away from the stable region by weighting the distance attached with the sign and the moving speed, and providing the calculated result as the rollover danger level to the rollover danger level outputting portion.

Namely, the moving speed calculator calculates a moving speed of the point S, in relation to the border line T1, specified on the two-dimensional map from the distance L1 attached with positive sign as shown in Fig.1, where a sign of the moving speed V1 indicates the same (positive) sign as the distance L1 as shown; the magnitude thereof corresponds to a case where for example the point S depicts a track P shown by a solid line from the origin whereby it moves away from the stable region R1 and approaches the left rollover dangerous region R2L (namely, a case of a slow approach due to a small variation of the roll angular velocity), or a case where the point S depicts a track Q shown by alternate long and short dashed lines shown whereby the point S approaches the left rollover dangerous region R2L (namely, a case of approach due to a rapidly increased roll angular velocity).

Therefore, when approaching the left rollover dangerous region R2L while depicting the track T or Q, the point has a possibility at the next moment where it further moves the way from the stable region R1 and rapidly progresses within the left rollover dangerous region R2L (namely, a possibility that a rollover dangerousness of the vehicle rapidly increases).

To this end, the approaching danger level calculator calculates a danger level (approaching danger level) of the points approaching the left rollover dangerous region R2L and moving away from the stable region R1 by weighting the moving speed V1 in addition to the distance L1, and provides the calculated result as the rollover danger level to the rollover danger level outputting portion.

Hereby, even in a case where the roll angular velocity rapidly increases as noted above, leaving little time up to the vehicle rollover, it is made possible to quickly determine the rollover danger level.

[5] In the above [4], the approaching danger level calculator may calculate as the approaching danger level a sum of a value weighted by multiplying the sign and the magnitude of the distance with a first constant and a value weighted by multiplying the sign and the magnitude of the moving speed with a second constant.

The first and the second constants can be suitably modified according to roll characteristics or the like of a vehicle. For example, if the second constant is set to a large value, the weight to be attached to the moving speed can be made larger, so that it becomes possible to rapidly determine the rollover danger level caused by an increase of the roll angular velocity as mentioned above.

[6] In the above [4], the rollover danger level outputting portion may further include a rollover dangerousness determining portion determining that when the distance or the approaching danger level indicates the sign corresponding to the side of the rollover dangerous region, there is a rollover dangerousness of the vehicle, and outputs the approaching danger level when the rollover dangerousness determining portion has determined that there is the dangerousness.

Namely, the positive sign of the approaching danger level corresponds to a case where the point specified on the two-dimensional map moves away from the stable region and approaches the rollover dangerous region while the negative sign corresponds to a case where the point does not approach the rollover dangerous region but resides on the side of the stable region, so that the rollover dangerousness determining portion determines that when the approaching danger level indicates the sign (positive sign) corresponding to the side of the rollover dangerous region, there is a rollover dangerousness of the vehicle.

Meanwhile, when the approaching danger level indicates the sign (negative sign) corresponding to the side of the stable region, the rollover dangerousness determining portion does not determine that there is the dangerousness.

It is to be noted that as described in the above [1], the same determination result as the above can also be obtained upon having determined the presence or absence of the dangerousness based on the sign of the distance.

This enables the rollover danger level outputting portion to output the approaching danger level as far as the rollover dangerousness determining portion has determined that there is the dangerousness.

[7] In the above [6], on the two-dimensional map, border lines may be set for forming a plurality of rollover dangerous regions mutually separated, wherein when the distance calculator calculates each distance from each border line, the moving speed calculator calculates each moving speed from each distance, the approaching danger level calculator calculates each approaching danger level of the point moving away from the stable region to each rollover dangerous region based on each distance and each moving speed and selects a maximum approaching danger level among the approaching danger levels calculated, the rollover dangerousness determining portion determines that there is the dangerousness when the maximum approaching danger level indicates the sign corresponding to the side of the rollover dangerous region, and the rollover danger level outputting portion outputs the maximum approaching danger level.

Namely, for example, on the two-dimensional map as shown in Fig.1, in a case where the border lines T1 and T2 are set for forming the left rollover dangerous region R2L and the right rollover dangerous region R2R mutually separated (the following description will be similarly applied to a case that rollover dangerous regions equal to or more than three are set or the border lines are not parallel or straight lines), the distance calculator calculates the distances L1 and L2 respectively from the border lines T1 and T2.

In this case, the moving speed calculator, as shown, calculates the moving speeds V1 and V2 respectively from the distances L1 and L2.

Then, the approaching danger level calculator calculates each approaching danger level of the point moving away from the stable region to the left rollover dangerous region R2L and the right rollover dangerous region R2R based on each of the distances L1 and L2 as well as the moving speeds V1 and V2, and selects the maximum approaching danger level among the approaching danger levels calculated.

In the example shown, the distance L1 and its moving speed V1 both have the positive sign while the distance L2 and its moving speed V2 both have the negative sign, so that the approaching danger level calculated based on the distance L1 and the moving speed V1 indicates the sign (positive sign) corresponding to the side of the left rollover dangerous region R2L while the approaching danger level calculated based on the distance L2 and the moving speed V2 indicates the sign (negative sign) corresponding to the side of the stable region R1. Therefore, the approaching danger level calculated based on the distance L1 and the moving speed V1 is selected as the maximum approaching danger level.

It is to be noted that why the maximum approaching danger level is selected is to specify the highest approaching danger level to the rollover dangerous regions where the vehicle has the highest dangerousness of rollover.

The rollover dangerousness determining portion determines that there is the dangerousness as described in the above [6] because the maximum approaching danger level indicates the sign (positive sign) corresponding to the side of the rollover dangerous region R2 (R2L or R2R), so that the rollover danger level output portion outputs the maximum approaching danger level. On the other hand, when the maximum approaching danger level indicates the sign (negative sign) corresponding to the side of the stable region R1, the rollover dangerousness determining portion does not determine that there is the dangerousness as described in the above [6].

Thus, even in a case where a plurality of rollover dangerous regions and border lines are set, it becomes possible to quickly determine the rollover danger level.

[8] In any one of the above [1]-[7], the vehicle rollover danger level determination apparatus may further comprise a target deceleration calculator calculating a target deceleration based on the rollover danger level, and a braking controller performing a deceleration control of the vehicle based on the target deceleration.

Namely, the target deceleration calculator calculates a target deceleration necessary for lowering the rollover danger level based on the rollover danger level outputted by the rollover danger level outputting portion, and the controller performs a deceleration control of the vehicle based on the target deceleration outputted from the target deceleration calculator.

Thus, a braking control is performed according to the rollover danger level continuously varying, not stepwise, depending on the state of the vehicle, so that it becomes possible to perform braking in line with the status of a vehicle.

According to the present invention, it is possible to determine the presence or absence of a rollover dangerousness of a vehicle and a continuously varying rollover danger level without requiring a large storage capacity, so that the present invention can be applied to alarming or braking which has a level according to the magnitude of the rollover danger level.

Also, the rollover dangerousness of a vehicle is determined based on a danger level at which the roll angle and the roll angular velocity of the vehicle move away from the stable region and approach the rollover dangerous region, so that a quick determination of the rollover danger level can be made even in a case where the roll angular velocity rapidly increases, thereby providing little time up to the rollover of the vehicle.

Brief Description of Drawings

Fig.1 is a graph showing one example of a two-dimensional map used for a vehicle rollover danger level determination apparatus according to the present invention;
Fig.2 is a block diagram showing an embodiment [1] of a vehicle rollover danger level determination apparatus according to the present invention;
Fig.3 is a flow chart showing a rollover danger level determining flow of an embodiment [1] of a vehicle rollover danger level determination apparatus according to the present invention;
Fig.4 is a graph showing a map for obtaining a target deceleration $G_{target}$ from a rollover danger level H used in a vehicle rollover danger level determination apparatus according to the present invention;
Fig.5 is a block diagram showing an embodiment [2] of a vehicle rollover danger level determination apparatus according to the present invention;
Fig.6 is a flow chart showing a rollover danger level determining flow of an embodiment [2] of a vehicle rollover danger level determination apparatus according to the present invention;
Fig.7 is a graph showing another example of a two-dimensional map used in a vehicle rollover danger level determination apparatus according to the present invention; and
Fig.8 is a graph showing a two-dimensional map used in a vehicle rollover danger level determination apparatus known in the art.

Description of Reference Numerals

11 vehicle
12 roll angle/roll angular velocity detector
13 brake controller
20 rollover danger level determination unit
21 distance calculator
22, 233 rollover dangerousness determining portion
23 rollover danger level output portion
231 moving speed calculator
232 approaching danger level calculator
24 target deceleration calculator
25 error decoder
A1, A2 X-axis intercept
B1, B2 Y-axis intercept
L1, L2 distance
V1, V1_1~V1_2, V2, V2_1~V2_2 moving speed
D1, D1_1~D1_2, D2, D2_1~D2_2 approaching danger level
Dmax maximum approaching danger level
R1 stable region
R2, R2L, R2L_1~R2L_2, R2R, R2R_1~R2R_2 rollover dangerous region
T1, T1_1~T1_2, T2, T2_1~T2_2 border line

Throughout the figures, like reference numerals indicate like or corresponding components.

Best Mode for Carrying Out the Invention

Embodiments [1] and [2] of the present invention will now be described referring to Figs.1-7.

Embodiment [1]: Figs.1, 2-4

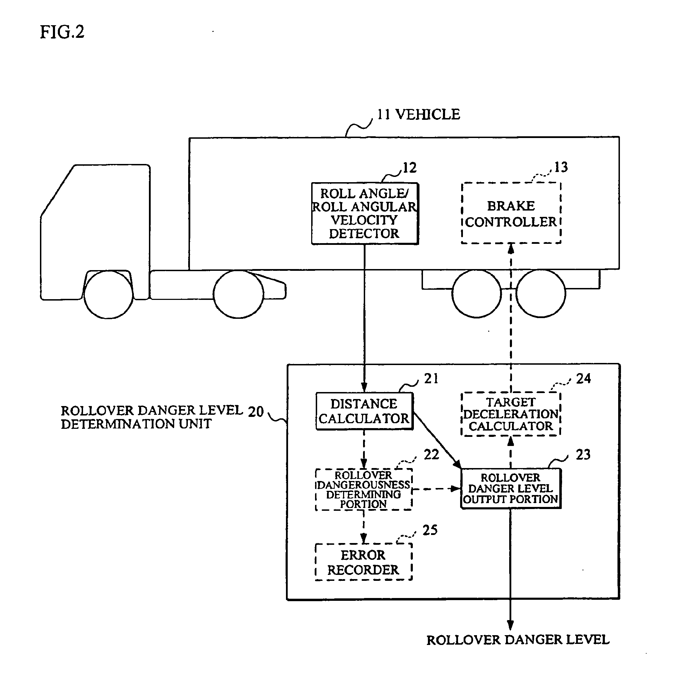

Fig.2 shows one embodiment of the arrangement of a vehicle rollover danger level determination apparatus, in which a rollover danger level determination unit 20 may be one forming a part of a control system of a vehicle 11 while it is shown outside the vehicle 11 for convenience sake.
Also in Fig.2, a roll angle/roll angular velocity detector 12 which detects a roll angle and a roll angular velocity of the vehicle 11 and a brake controller 13 which performs a brake control of the vehicle 11 may be respectively included within the rollover danger level determination unit 20 by while they are shown outside the rollover danger level determination unit 20.
The rollover danger level determination unit 20 is composed of, in addition to, the roll angle/roll angular velocity detector 12 and the brake controller 13, a distance calculator 21, a rollover dangerousness determining portion 22, a rollover danger level output portion 23, a target deceleration calculator 24, and an error recorder 25, as shown.

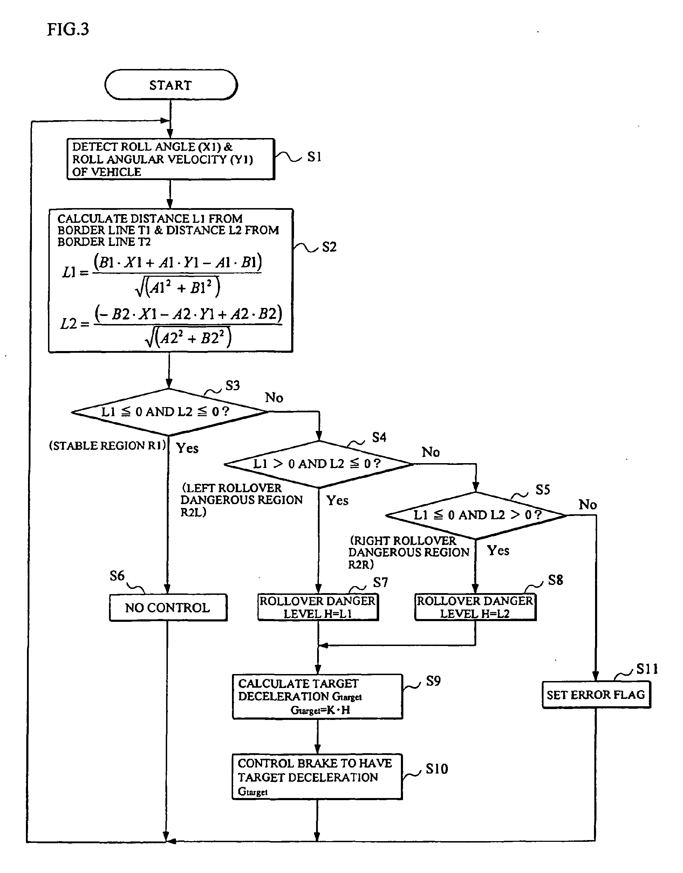

Fig.3 shows an operation flow of the rollover danger level determination unit 20 shown in Fig.2, along which the functions of the above noted components will now be described:
First, at step S1, the roll angle/roll angular velocity detector 12 detects a roll angle (X1) and a roll angular velocity (Y1).
It is to be noted that the roll angle/roll angular velocity detector 12 may employ various known roll angle/roll angular velocity acquiring means such as a sensor detecting a roll angle and a roll angular velocity at all times as the vehicle 11 runs, or one calculating a roll angle and a roll angular velocity based on a numerical value obtained from a predetermined sensor, or the like.
It is to be noted that the roll angle/roll angular velocity detector 12 may be divided into a roll angle detector and a roll angular velocity detector.
Then at step S2, the distance calculator 21 calculates the distances L1 and L2 from the border lines T1 and T2 in the two-dimensional map (see Fig.1) to the point S (X1, Y1) specified by the roll angle (X1) and the roll angular velocity (Y1) detected by the roll angle/roll angular velocity detector 12, respectively in accordance with the following Eqs.(1) and (2), and outputs them:
$$L1 = \frac{(B1 \cdot X1 + A1 \cdot Y1 - A1 \cdot B1)}{\sqrt{(A1^2 + B1^2)}} \qquad \cdots \text{Eq.(1)}$$

$$L2 = \frac{(-B2 \cdot X1 - A2 \cdot Y1 + A2 \cdot B2)}{\sqrt{(A2^2 + B2^2)}} \qquad \cdots \text{Eq.(2)}$$

where as shown in Fig.1, A1 and B1 are respectively an X-axis intercept and an Y-axis intercept of the border line T1 while A2 and B2 are respectively an X-axis intercept and an Y-axis intercept of the border line T2.

In this embodiment, supposing that the side of the left rollover dangerous region R2L on the bases of the border line T1 and the side of the right rollover dangerous region R2R on the bases of the border line T2 are positive while the side of the stable region R1 in either case is negative, the combination of the distances L1 and L2 is as follows:

(1) In case where $L1 \leqq 0$ and $L2 \leqq 0$, there is no dangerousness of rollover;

(2) In case where $L1>0$ and $L2 \leqq 0$, there is a dangerousness of rollover to the left;

(3) In case where $L1 \leqq 0$ and $L2>0$, there is a dangerousness of rollover to the right;

(4) In case where $L1>0$ and $L2>0$, there is a system error.

Therefore, at steps S3-S5, the rollover dangerousness determining portion 22 makes a determination based on the distances L1 and L2 provided by the distance calculator 21.

Namely, in case where $L1 \leqq 0$ and $L2 \leqq 0$ at step S3, it is determined that there is no dangerousness of rollover (within the stable region R1), making no controls (step S6).

In case where $L1>0$ and $L2 \leqq 0$ at step S4, it is determined to be within the left rollover dangerous region R2L, whereby the rollover danger level output portion 23 obtains a rollover danger level H of the left rollover = L1 (step S7).

In case where $L1 \leqq 0$ and $L2>0$ at step S5, it is determined to be within the right rollover dangerous region R2R, whereby the rollover danger level output portion 23 obtains the rollover danger level H of the right rollover = L2 (step S8).

Thus, in this embodiment, the distance L1 in the presence of a left rollover dangerousness and the distance L2 in the presence of a right rollover dangerousness are adopted without changes as a value of the rollover danger level H.

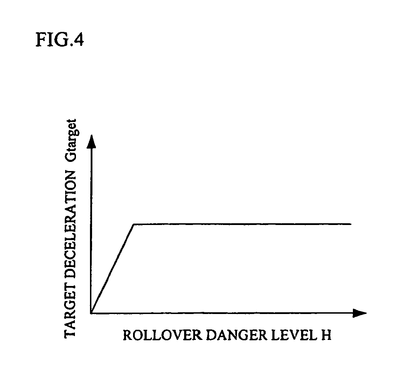

At step S9, based on the rollover danger level H obtained at step S7 or S8, the target deceleration calculator 24 calculates a target deceleration $G_{target}$ necessary for preventing the vehicle rollover. While it is supposed in this embodiment that the target deceleration $G_{target}$ = K*H to obtain the target deceleration $G_{target}$ by multiplying the rollover danger level H with a constant K, the calculating method of the target deceleration $G_{target}$ is not limited to that method but the target deceleration $G_{target}$ may be one varying as the rollover danger level H increases or decreases. Besides the one proportional to the rollover danger level H, for example the one proportional to n-th (n>0) power of the rollover danger level H such as the one proportional to the rollover danger level H squared, or the one proportional to a square root of the rollover danger level H is conceived. Alternatively, the target deceleration $G_{target}$ may be determined with a map in relation to the rollover danger level H as shown in Fig.4.

At step S10, in order to assume the target deceleration $G_{target}$ calculated at step S9, the brake controller 13 performs a brake control by calculating a brake pressure necessary for the wheels.

For a controllable brake by the brake controller 13, a wheel brake of the vehicle 11, an auxiliary brake such as a retarder, an exhaust brake, an engine brake, or the like is conceived, where it is desirable to control the wheel brake because the intensity of braking force can be controlled depending on the rollover danger level H while the retarder or exhaust brake only has to be controlled ON when it is found that there is a dangerousness of rollover.

At step S11, in case where $L1>0$ and $L2>0$ at the above step S5, the error recorder 25 records an error flag based on the determination of system error by the rollover dangerousness determining portion 22.

Embodiment [2]: Figs.1, 5-7

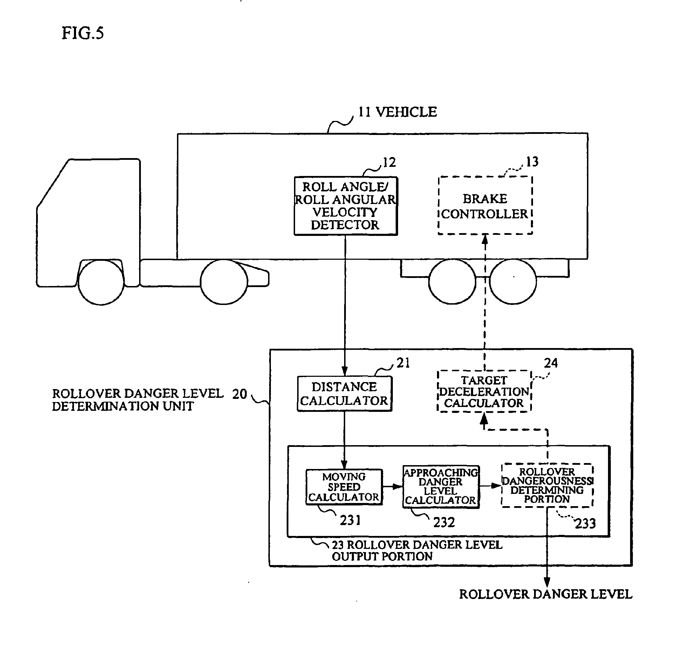

The rollover danger level determination unit 20 shown in Fig.5 is arranged, in addition to the arrangement of the above embodiment [1], such that the rollover danger level output portion 23 includes a moving speed calculator, an approaching danger level calculator 232, and a rollover danger level determination portion 233 instead of the rollover dangerousness determining portion 22 provided in the above embodiment [1], where the error recorder 25 is not provided different from the above embodiment [1].

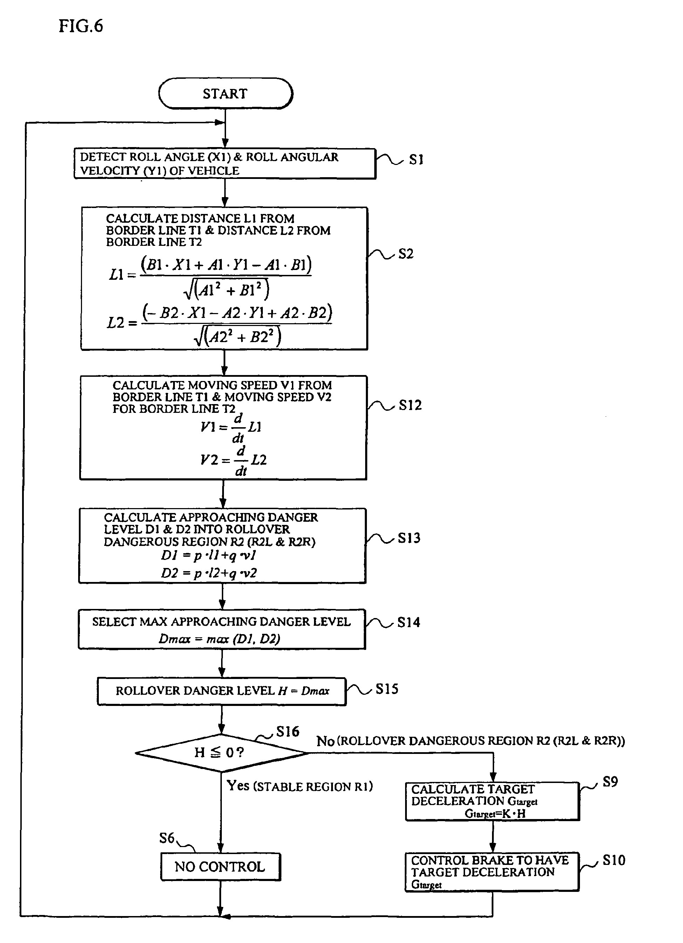

Fig.6 shows an operation flow of the rollover danger level determination unit 20 shown in Fig.5, along which the functions of the components will be described as follows:

First, in the same manner as the above embodiment [1], the roll angle/roll angular velocity detector 12 detects (step S1) the roll angle (X1) and the roll angular velocity (Y1), and the distance calculator 21 calculates the distances L1 and L2 respectively from the border lines T1 and T2 on the two-dimensional map (see Fig.1) to the point S (X1, Y1) specified by the roll angle (X1) and the roll angular velocity (Y1) detected by the roll angle/roll angular velocity detector 12 and provides them to the rollover danger level output portion 23 (step S2).

It is also supposed in this embodiment similar to the above embodiment [1] that the distance on the side of the left rollover dangerous region R2L with reference to the border line T1 and the distance of the side of the right rollover dangerous region R2R with reference to the border line T2 are positive while the distance on the side of the stable region R1 in either case is negative. Therefore, in the case of the point S in Fig.1, the aforementioned distance L1 is to be attached with a positive sign while the distance L2 is to be attached with a negative sign.

The moving speed calculator 231 within the rollover danger level output portion 23 calculates a moving speed V1 of the point S, in relation to the border line T1, specified on the two-dimensional map from the distance L1 attached with the positive sign according to the following Eq.(3) and calculates a moving speed V2 of the point S, in relation to the border line T2, from the distance L2 according to the following Eq.(4) (step S12):

$$V1 = \frac{d}{dt}L1 \qquad \cdots \text{ Eq.(3)}$$

$$V2 = \frac{d}{dt}L2 \qquad \cdots \text{ Eq.(4)}$$

where the polarities of the moving speeds V1 and V2 are the same as those of the distances L1 and L2 (i.e. positive and negative polarities respectively) as shown.

Then, the approaching danger level calculator 232 calculates the sum of a value weighted by multiplying the sign and the magnitude 11 of the distance L1 with a constant p (>0) and a value weighted by multiplying the sign and the magnitude v1 of the moving speed V1 with a constant q (>0), as an approaching danger level D1 of the point S to the left rollover dangerous region R2L (see Eq.(5)). Also the approaching danger level calculator 232 similarly calculates an approaching danger level D2 of the point S to the right rollover dangerous region R2R by summing the distance L2 and the moving speed V2 weighted (see Eq.(6)) (step S13):

$$D1 = p \cdot l1 + q \cdot v1 \qquad \cdots \text{ Eq.(5)}$$

$$D2 = p \cdot l2 + q \cdot v2 \qquad \cdots \text{ Eq.(6)}$$

In this embodiment, the constants (coefficients) p and q being both a positive value, the polarities of the approaching danger levels D1 and D2 calculated assume the same as the sign of the distance L1 (and the moving speed V1) and the sign of the distance L2 (and the moving speed V2).

It is to be noted that the approaching danger level is calculated as one having only the sign and the magnitude of the distance and the moving speed by the above weighting so that the dimensions of the distance and the moving speed are not associated.

It is to be noted that while the same constants p and q are used for calculating the approaching danger levels D1 and D2 as given in Eqs.(5) and (6), a different constant may be used for each approaching danger level calculated according to the roll characteristics of a vehicle (e.g. in a case where the right rolling and the left rolling have different characteristics) or the like.

Then, the approaching danger level calculator 232 selects the maximum approaching danger level Dmax including the sign from among the calculated approaching danger levels D1 and D2 in accordance with the following Eq.(7) (step S14):

$$Dmax = max\ (D1,\ D2) \qquad \cdots\ Eq.(7)$$

In this example, the distance L1 and its moving speed V1 have both the positive sign while the distance L2 and the moving speed V2 have both the negative sign, so that the approaching danger level D1 indicates a positive sign while the approaching danger level D2 indicates the negative sign. Therefore, the approaching danger level D1 is selected as the maximum approaching danger level Dmax.

The approaching danger level calculator 232 provides the maximum approaching danger level Dmax to the rollover dangerousness determining portion 233 as a rollover danger level H (step S15).

When the rollover danger level H indicates the negative sign, the rollover dangerousness determining portion 233 determines that there is no dangerousness of rollover (within the stable region R1) (step S16). Therefore, the rollover danger level output portion 23 provides no output, performing no control in the same manner as the above embodiment [1] (step S6).

It is to be noted that while in this embodiment the rollover dangerousness determining portion 233 determines a dangerousness of rollover based on the sign of the roll danger level (i.e. approaching danger level), such a dangerousness of rollover can also be determined based on the sign of the distance in the same manner as the above embodiment [1].

On the other hand, when the rollover danger level H indicates the positive sign at the above step S16, the rollover dangerousness determining portion 233 determines that there is the dangerousness of rollover (within the rollover dangerous region R2 (R2L or R2R)). Therefore, the rollover danger level output portion 23 outputs the rollover danger level H.

In response, the target deceleration calculator 24 calculates the target deceleration $G_{target}$ in the same manner as the above embodiment [1] to be provided to the brake controller 13 (step S9), which calculates a brake pressure necessary for the wheels for the braking control (step S10).

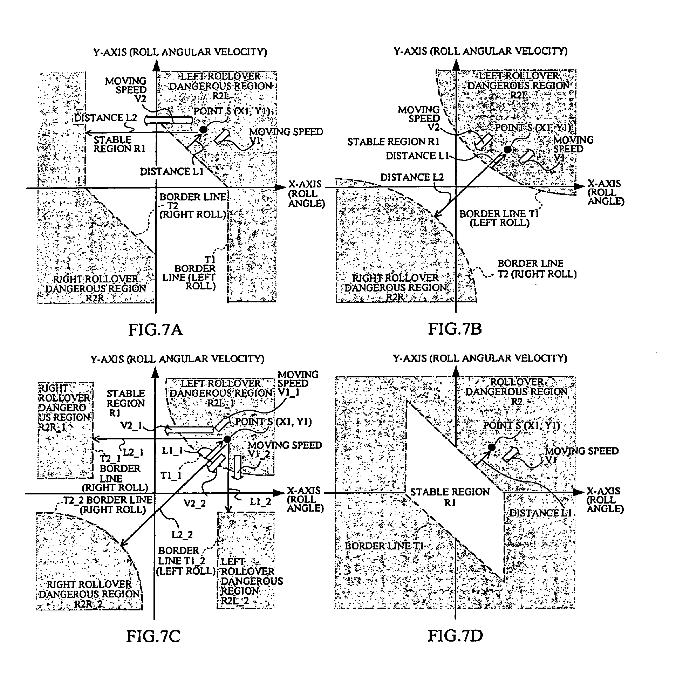

Since the above description has described the operation of the case where to rollover dangerous regions R2L and R2R are separately formed by the two mutually parallel border lines T1 and T2 as shown in the two-dimensional map in Fig.1, two-dimensional map examples (Figs.7A-7D) and their corresponding operation examples other than the above case will be described as follows:

<u>(1) Case of polygonal border line: Fig.7A</u>

On the two-dimensional map shown in Fig.7A, polygonal border lines T1 and T2 are set to separately form a left rollover dangerous region R2L and a right rollover dangerous region R2R, where a point S (X1, Y1) specified on the two-dimensional map by a roll angle (X) and a roll angular velocity (Y) is supposed to reside within e.g. the left rollover dangerous region R2L.

It is to be noted that in this two-dimensional map example and further two-dimensional map examples (2)-(4) described later, as with the above, the distance, moving speed, and approaching danger level on the side of the rollover dangerous region in relation to the border line are supposed to be positive while the distance, moving speed, and approaching danger level on the side of the stable region are supposed to be negative.

The moving speed calculator 231 calculates the moving speed V1 (positive sign) of the point S in relation to the border line T1 and the moving speed V2 (negative sign) of the point S in relation to the border line T2 respectively based on the distances L1 (positive sign) and L2 (negative sign) of the point S, respectively from the border lines T1 and T2, calculated by the distance calculator 21.

Then, the approaching danger level calculator 232 calculates the approaching danger level D1 (positive sign) of the point S toward the left rollover dangerous region R2L and the approaching danger level D2 (negative sign) toward the right rollover dangerous region R2R in the same manner as the above, selects the approaching danger level D1 as the maximum approaching danger level Dmax, and provides the maximum approaching danger level Dmax to the rollover dangerousness determining portion 233 as the rollover danger level H.

Now that the rollover danger level H indicates the positive sign, the rollover dangerousness determining portion 233 can determine that there is a dangerousness of rollover.

<u>(2) Case of curved border line: Fig.7B</u>

On a two-dimensional map shown in Fig.7B, curved border lines T1 and T2 are set to separately form a left rollover dangerous region R2L and a right rollover dangerous region R2R, where a point S (X1, Y1) specified on the two-dimensional map by a roll angle (X) and a roll angular velocity (Y) is supposed to reside within e.g. the left rollover dangerous region R2L, in the same manner as the case of the above two-dimensional map example (1).

The moving speed calculator 231 calculates the moving speed V1 (positive sign) of the point S in relation to the border line T1 and the moving speed V2 (negative sign) of the point S in relation to the border line T2 respectively based on the distances L1 (positive sign) and L2 (negative sign) of the point S, respectively from the border lines T1 and T2, calculated by the distance calculator 21, in the same manner as the case of the above two-dimensional map example (1).

Then, the approaching danger level calculator 232 calculates the approaching danger level D1 (positive sign) of the point S toward the left rollover dangerous region R2L and the approaching danger level D2 (negative sign) toward the right rollover dangerous region R2R in the same manner as the case of the above two-dimensional map example (1), selects the approaching danger level D1 as the maximum approaching danger level Dmax, and provides the maximum approaching danger level Dmax to the rollover dangerousness determining portion 233 as the rollover danger level H.

This enables the rollover dangerousness determining portion 233 to determine a dangerousness of rollover in the same manner as the above two-dimensional map example (1).

<u>(3) Case of three or more rollover dangerous regions: Fig.7C</u>

On a two-dimensional map shown in Fig.7C, from rollover dangerous regions (left rollover dangerous regions R2L_1 and R2L_2, and right rollover dangerous regions R2R_1 and R2R_2) separately formed by four border lines T1_1, T1_2, and T2_1, T2_2, where a point S (X1, Y1) specified on the two-dimensional map by a roll angle (X) and a roll angular velocity (Y) is supposed to reside within e.g. the left rollover dangerous region R2L_1.

In this case, the moving speed calculator 231 calculates moving speeds V1_1 (positive sign) and V1_2, V2_1, V2_2 (all negative signs) of the point S respectively based on distances L1_1 (positive sign) and L1_2, L2_1, L2_2 (all negative signs) from the border lines.

Then the approaching danger level calculator 232 calculates approaching danger levels D1_1 (positive sign) and D1_2, D2_1, D2_2 (all negative signs) of the point S toward the rollover dangerous regions, selects the approaching danger level D1_1 as the maximum approaching danger level Dmax, and provides the maximum approaching danger level Dmax to the rollover dangerousness determining portion 233 as the rollover danger level H.

This enables the rollover dangerousness determining portion 233 to determine a dangerousness of rollover in the same manner as the cases of the above two-dimensional map examples (1) and (2).

<u>(4) Case of single rollover dangerous region: Fig.7D</u>

On a two-dimensional map shown in Fig.7D, a single border line T1 forming a single rollover dangerous region R2, where a point S (X1, Y1) specified on the two-dimensional map by a roll angle (X) and a roll angular velocity (Y) is supposed to reside on the side of e.g. the first quadrant of the rollover dangerous region R2.

In this case, the moving speed calculator 231 calculates a moving speed V1 (positive sign) of the point S based on the distance L1 (positive sign) from the border line T1.

Then, the approaching danger level calculator 232 calculates an approaching danger level D1 (positive sign) of the point S toward a left rollover dangerous region. Now that only one approaching danger level is calculated, the approaching danger level D1 is provided as the rollover danger level H without modifications to the rollover dangerousness determining portion 233.

When the point S resides on the side of the stable region R1, the approaching danger level D1 indicating the negative sign is provided as the rollover danger level H to the rollover dangerousness determining portion 233.

This enables the rollover dangerousness determining portion 233 to determine a dangerousness of rollover in the same manner as the cases of the above two-dimensional map examples (1)-(3).

It is to be noted that the present invention is not limited to the above embodiments whereas based on the recitation of the claims, various modifications may be made by a person skilled in the art.

For example, among the components of the rollover danger level determination unit 20 shown in Fig.2, the rollover dangerousness determining portion 22, the error recorder 25, the target deceleration calculator 24, and the brake controller 13 are dispensable as shown by dotted lines, so that in a case of an arrangement without these components, the distances L1 and L2 calculated by the distance calculator 21 may be directly provided to the rollover danger level output portion 23 as shown by a solid arrow in Fig.2 for example, and the rollover danger level H determined by the rollover danger level output portion 23 may be outputted to the outside.

In this case, according to the operation flow of Fig.3, the distance calculator 21 may calculate either one of the distances L1 and L2 at the process of step S2, and the rollover danger level output portion 23 may determine the presence or absence of a dangerousness of rollover only based on the sign of the distance L1 or L2 outputted from the distance calculator 21 instead of the determination processes of steps S3-S5 performed by the rollover dangerousness determining portion 22 and may output the corresponding distance L1 or L2 as the rollover danger level H in the presence of a dangerousness of rollover.

Also, if the distance calculator 21 is adapted to alternately calculate the distances L1 and L2 at the process of step S2, the determination processes of steps S3-S5 are executed by using the distances L1 and L2 continuously calculated, thereby obtaining substantially the same determination result as the case where the distances L1 and L2 are calculated at the same time.

Also according to the operation flow in Fig.6, the approaching danger levels D1 and D2 are calculated at the process of step S13 respectively as a linear sum of the distance L1 and the moving speed V1 (sum of values weighted by multiplying respective polarities and magnitudes with constants), and a linear sum of the distance L2 and the moving speed V2, where for example another calculating method such as making the linear sum added with an offset the approaching danger level, making a power of the linear sum the approaching danger level, or making what is referred to in a rollover danger level map set in relation to the linear sum the approaching danger level may be used.

While in this embodiment a brake control is performed according to the magnitude of the rollover danger level H, such an arrangement that an alarm is issued according to the magnitude of the rollover danger level H instead of or together with the braking control can be adopted.

## Claims

1. A vehicle rollover danger level determination apparatus (20) having a roll angle detector (12) detecting a roll angle (X1) of a vehicle (11), a roll angular velocity detector (12) detecting a roll angular velocity (Y1) of the vehicle and a two-dimensional map showing a relationship between a roll angle (X1) and a roll angular velocity (Y1) of a vehicle to determine a rollover danger level (H) of the vehicle (11), **characterized by** comprising:

   a distance calculator (21) calculating a distance (L1, L2) from a border line (T1, T2) which separates a rollover dangerous region (R2L, R2R) from a stable region (R1) set on a the two-dimensional map to a point (S) specified on the two-dimensional map by the roll angle (X1) and the roll angular velocity (Y1) detected, and outputting the distance (L1, L2) attached with a sign depending on whether the point (S) resides on a side of the rollover dangerous region (R2L, R2R) or on a side of the stable region with respect to the border line; and
   a rollover danger level outputting portion (23) calculating a rollover danger level (H) that is a scale of a rollover dangerousness based on the distance (L1, L2) attached with the sign to be outputted.

2. The vehicle rollover danger level determination apparatus (20) as claimed in claim 1,
   wherein two border lines (T1, T2) are set, on the two-dimensional map, respectively separating the rollover dangerous region (R2L, R2R) corresponding to a left roll or a right roll and the stable region sandwiched between the rollover dangerous regions (R2L, R2R);
   the apparatus (20) further comprising a rollover dangerousness determining portion (233) which determines a presence or absence of a rollover dangerousness of the vehicle (11) based on the sign of the distance (L1, L2);
   the distance calculator (21) calculating distances (L1, L2) from the two border lines (T1, T2) at the same time; the rollover dangerousness determining portion (233) determining that with the distances (L1, L2) being made first and second distances, when only either one of the first and the second distances (L1, L2) has a sign indicating the side of the rollover dangerous region (R2L, R2R), there is the dangerousness; and the rollover danger level outputting portion (23) calculating the rollover danger level (H) based on the first and the second distances (L1, L2) indicating the sign corresponding to the side of the rollover dangerous region (R2L, R2R).

3. The vehicle rollover danger level determination apparatus (20) as claimed in claim 2, further comprising an error flag recorder (25) recording an error flag based on a determination result of the rollover dangerousness determining portion (233) which determines that when both of the first and the second distances (L1, L2) indicate the sign corresponding to the side of the rollover dangerous region (R2L, R2R), a system abnormality has occurred.

4. The vehicle rollover danger level determination apparatus (20) as claimed in claim 1, wherein the rollover danger level outputting portion (23) comprises a moving speed calculator (231) calculating a moving speed of the point (S), in relation to the border line (T1, T2), specified on the two-dimensional map from the distance (L1, L2) attached with the sign; and an approaching danger level calculator (232) calculating a danger level of the point (S) approaching the rollover dangerous region (R2L, R2R) and moving away from the stable region by weighting the distance (L1, L2) attached with the sign and the moving speed, and providing the calculated result as the rollover danger level (H) to the rollover danger level outputting portion (23).

5. The vehicle rollover danger level determination apparatus (20) as claimed in claim 4, wherein the approaching danger level calculator (232) calculates as the approaching danger level a sum of a value weighted by multiplying the sign and the magnitude of the distance (L1, L2) with a first constant and a value weighted by multiplying the sign and the magnitude of the moving speed with a second constant.

6. The vehicle rollover danger level determination apparatus (20) as claimed in claim 4, wherein the rollover danger level outputting portion (23) further includes a rollover dangerousness determining portion (233) determining that when the distance (L1, L2) or the approaching danger level indicates the sign corresponding to the side of the rollover dangerous region (R2L, R2R), there is a rollover dangerousness of the vehicle (11), and outputs the approaching danger level when the rollover dangerousness determining portion (233) has determined that there is the dangerousness.

7. The vehicle rollover danger level determination apparatus (20) as claimed in claim 6, wherein on the two-dimensional map, border lines (T1, T2) are set for forming a plurality of rollover dangerous regions (R2L, R2R) mutually separated; when the distance calculator (21) calculates each distance (L1, L2) from each border line (T1, T2), the moving speed calculator (231) calculates each moving speed from each distance (L1, L2), the approaching danger level calculator (232) calculates each approaching danger level of the point (S) moving away from the stable region to each rollover dangerous region (R2L, R2R) based on each distance (L1, L2) and each moving speed and selects a maximum approaching danger level (Dmax) among the approaching danger levels calculated, the rollover dangerousness determining portion (233) determines that there is the dangerousness when the maximum approaching danger level (Dmax) indicates the sign corresponding to the side of the rollover dangerous region (R2L, R2R), and the rollover danger level outputting portion (23) outputs the maximum approaching danger level (Dmax).

8. The vehicle rollover danger level determination apparatus (20) as claimed in claim 1, further comprising a target deceleration calculator (24) calculating a target deceleration (Gtarget) based on the rollover danger level (H), and a braking controller (13) performing a deceleration control of the vehicle (11) based on the target deceleration (Gtarget).

## Patentansprüche

1. Eine Vorrichtung (20) zur Erkennung eines Fahrzeugüberschlagsrisikos mit einem Rollwinkeldetektor (12), der einen Rollwinkel (X1) eines Fahrzeugs (11) erfasst, einem Rollwinkelgeschwindigkeitsdetektor (12), der eine Rollwinkelgeschwindigkeit (Y1) des Fahrzeugs erfasst, und einer zweidimensionalen Abbildung, die ein Verhältnis zwischen einem Rollwinkel (X1) und einer Rollwinkelgeschwindigkeit (Y1) eines Fahrzeugs aufzeigt, um ein Überschlagsrisikoniveau (H) des Fahrzeugs (11) zu bestimmen,
**dadurch gekennzeichnet, dass** sie umfasst:

einen Abstandsberechner (21), der einen Abstand (L1, L2) einer Begrenzungslinie (T1, T2), die eine Überschlagsgefahrenregion (R2L, R2R) von einer auf der zweidimensionalen Abbildung festgelegten stabilen Region (R1) trennt, zu einem Punkt (S) berechnet, der auf der zweidimensionalen Abbildung durch den Rollwinkel (X1) und die erfasste Rollwinkelgeschwindigkeit (Y1) bestimmt ist,
und der den Abstand (L1, L2) mit einem angefügten Zeichen ausgibt, das davon abhängt, ob der Punkt (S) in Bezug auf die Begrenzungslinie auf einer Seite der Überschlagsgefahrenregion (R2L, R2R) oder auf einer Seite der stabilen Region liegt; und
eine Überschlagsrisikoniveau-Ausgabeeinheit (23), die ein Überschlagsrisikoniveau (H) berechnet, das basierend auf dem Abstand (L1, L2) mit dem angefügten auszugebenden Zeichen eine Staffelung eines Überschlagsrisikos ist.

2. Die Vorrichtung (20) zur Erkennung eines Fahrzeugüberschlagsrisikos gemäß Anspruch 1, wobei zwei Begrenzungslinien (T1, T2) auf der zweidimensionalen Abbildung so festgelegt sind, dass sie die zu einer Linksrolle beziehungsweise die zu einer Rechtsrolle gehörige Überschlagsgefahrenregion (R2L, R2R) und die zwischen den Überschlagsgefahrenregionen (R2L, R2R) eingefasste stabile Region trennen;
wobei die Vorrichtung (20) ferner eine Überschlagsrisiko-Bestimmungseinheit (233) umfasst, die auf Grundlage des Zeichens des Abstandes (L1, L2) ein Vorhandensein oder ein Fehlen einer Überschlagsgefahr für das Fahrzeug bestimmt;

wobei der Abstandsberechner (21) Abstände (L1, L2) von den beiden Begrenzungslinien (T1, T2) gleichzeitig berechnet; die Überschlagsrisiko-Bestimmungseinheit (233) bestimmt, dass die Gefahr besteht, wenn, mit den Abständen (L1, L2) als erstem und zweitem Abstand, nur einer von erstem und zweitem Abstand (L1, L2) ein Zeichen hat, das die Seite der Überschlagsgefahrenregion (R2L, R2R) anzeigt; und wobei die Überschlagsrisikoniveau-Ausgabeeinheit (23) das Überschlagsrisikoniveau (H) basierend auf dem ersten und dem zweiten Abstand (L1, L2) berechnet, die das Zeichen entsprechend der Seite der Überschlagsgefahrenregion (R2L, R2R) angeben.

3. Die Vorrichtung (20) zur Erkennung eines Fahrzeugüberschlagsrisikos gemäß Anspruch 2, die ferner einen Fehlermarken-Registrierer (25) umfasst, der eine Fehlermarke auf Grundlage eines Ergebnisses einer Bestimmung durch die Überschlagsrisiko-Bestimmungseinheit (233) erfasst, das bestimmt, dass eine Systemunregelmäßigkeit aufgetreten ist, wenn sowohl der erste als auch der zweite Abstand (L1, L2) das Zeichen anzeigt, das zu der Seite der Überschlagsgefahrenregion (R2L, R2R) gehört.

4. Die Vorrichtung (20) zur Erkennung eines Fahrzeugüberschlagsrisikos gemäß Anspruch 1, wobei die Überschlagsrisikoniveau-Ausgabeeinheit (23) einen Bewegungsgeschwindigkeitsberechner (231) umfasst, der eine Bewegungsgeschwindigkeit des Punktes (S) in Bezug auf die Begrenzungslinie (T1, T2) berechnet, die auf der zweidimensionalen Abbildung durch den Abstand (L1, L2) mit dem angehängten Zeichen festgelegt ist;

und einen Gefahrenannäherungsniveau-Berechner (232), der durch Gewichten des Abstands (L1, L2) mit dem angehängten Zeichen und der Bewegungsgeschwindigkeit ein Gefahrenniveau dafür berechnet, dass der Punkt (S) der Überschlagsgefahrenregion (R2L, R2R) nahe kommt und sich von der stabilen Region entfernt, und der das berechnete Ergebnis als Überschlagsgefahrenniveau der Überschlagsrisikoniveau-Ausgabeeinheit (23) bereitstellt.

5. Die Vorrichtung (20) zur Erkennung eines Fahrzeugüberschlagsrisikos gemäß Anspruch 4, wobei der Gefahrenannäherungsniveau-Berechner (232) als Gefahrenannäherungsniveau eine Summe eines Wertes berechnet, der duch Multiplikation des Zeichens und der Größe des Abstandes (L1, L2) mit einer festen Konstanten gewichtet ist, und eines Wertes, der durch Multiplikation des zwichens und der Größe der Bewegungsgeschwindigkeit mit einer zweiten Konstanten gewichtet ist.

6. Die Vorrichtung (20) zur Erkennung eines Fahrzeugüberschlagsrisikos gemäß Anspruch 4, wobei die Überschlagsrisikoniveau-Ausgabeeinheit (23) weiterhin eine Überschlagsrisiko-Bestimmungseinheit (233) umfasst, die bestimmt, dass eine Überschlagsgefahr für das Fahrzeug besteht, wenn der Abstand (L1, L2) oder das Gefahrenannäherungsniveau das zu der Seite der Überschlagsgefahrenregion (R1, R2) gehörige Zeichen angibt, und das Gefahrenannäherungsniveau ausgibt, wenn die Überschlagsrisiko-Bestimmungseinheit (233) bestimmt hat, dass die Gefahr besteht.

7. Die Vorrichtung (20) zur Erkennung eines Fahrzeugüberschlagsrisikos gemäß Anspruch 6, wobei auf der zweidimensionalen Abbildung Begrenzungslinien (T1, T2) festgelegt sind, um eine Mehrzahl paarweise voneinander getrennter Überschlagsgefahrenregionen (R2L, R2R) auszubilden,

wenn der Abstandsberechner (21) jeden Abstand (L1, L2) von der Begrenzungslinie (T1, T2) berechnet, berechnet der Bewegungsgeschwindigkeitsberechner (231) jede Bewegungsgeschwindigkeit aus jedem Abstand, der Gefahrenannäherungsniveau-Berechner (232) berechnet auf Grundlage jedes Abstandes (L1, L2) und jeder Bewegungsgeschwindigkeit jedes Gefahrenannäherungsniveau des sich von der stabilen Region in Richtung jeder Überschlagsgefahrenregion (R2L, R2R) entfernenden Punktes (S) und wählt unter den berechneten Gefahrenannäherungsniveaus ein maximales Gefahrenannäherungsniveau (Dmax) aus,

die Überschlagsrisiko-Bestimmungseinheit (233) bestimmt, dass die Gefahr besteht, wenn das maximale Gefahrenannäherungsniveau (Dmax) das zur Seite der Überschlagsgefahrenregion (R2L, R2R) gehörige Zeichen anzeigt, und die Überschlagsrisikoniveau-Ausgabeeinheit (23) gibt das Gefahrenannäherungsniveau (Dmax) aus.

8. Die Vorrichtung (20) zur Erkennung eines Fahrzeugüberschlagsrisikos gemäß Anspruch 1, die weiterhin einen Zielbremsungsberechner (24) umfasst, der auf Grundlage des Überschlagsrisikoniveaus (H) eine Zielbremsung (Gtarget) berechnet, und eine Bremssteuerung (13), die auf Grundlage der Zielbremsung eine Steuerung der Bremsung des Fahrzeugs (11) durchführt.

**Revendications**

1. Appareil de détermination du niveau de danger de renversement de véhicule (20) ayant un détecteur d'angle de roulis (12) détectant un angle de roulis (X1) d'un véhicule (11), un détecteur de vitesse angulaire de roulis (12) détectant une vitesse angulaire de roulis (Y1) du véhicule et une carte bidimensionnelle représentant la relation entre un angle de roulis (X1) et une vitesse angulaire de roulis (Y1) d'un véhicule pour déterminer un niveau de danger de renversement (H) du véhicule (11), **caractérisé en ce qu'**il comprend :

   un calculateur de distance (21) calculant une distance (L1, L2) d'une ligne de bordure (T1, T2) qui sépare une région de danger de renversement (R2L, R2R) d'une région stable (R1) définie sur la carte bidimensionnelle à un point (S) spécifié sur la carte bidimensionnelle par l'angle de roulis (X1) et la vitesse angulaire de roulis (Y1) détectée, et transmettant la distance (L1, L2) associée à un signe suivant que le point (S) réside sur un côté de la région de danger de renversement (R2L, R2R) ou sur un côté de la région stable par rapport à la ligne de bordure ; et
   une partie de transmission de niveau de danger de renversement (23) calculant un niveau de danger de renversement (H) qui est une échelle d'une dangerosité de renversement basée sur la distance (L1, L2) associée au signe à transmettre.

2. Appareil de détermination de niveau de danger de renversement de véhicule (20) selon la revendication 1, dans lequel deux lignes de bordure (T1, T2) sont définies, sur la carte bidimensionnelle, séparant respectivement la région de danger de renversement (R2L, R2R) correspondant à un roulis à gauche ou un roulis à droite et la région stable intercalée entre les régions de danger de renversement (R2L, R2R) ;
   l'appareil (20) comprenant en outre une partie de détermination de dangerosité de renversement (233) qui détermine la présence ou l'absence d'une dangerosité de renversement du véhicule (11) sur la base du signe de la distance (L1, L2) ;
   le calculateur de distance (21) calculant des distances (L1, L2) depuis les deux lignes de bordure (T1, T2) simultanément ; la partie de détermination de dangerosité de renversement (233) déterminant qu'avec les distances (L1, L2) étant définies comme des première et deuxième distances, lorsqu'une seule des première et deuxième distances (L1, L2) a un signe indiquant le côté de la région de danger de renversement (R2L, R2R), il existe une dangerosité ; et la partie de transmission de niveau de danger de renversement (23) calculant le niveau de danger de renversement (H) sur la base des première et deuxième distances (L1, L2) indiquant le signe correspondant au côté de la région de danger de renversement (R2L, R2R).

3. Appareil de détermination de niveau de danger de renversement de véhicule (20) selon la revendication 2, comprenant en outre un enregistreur de drapeau d'erreur (25) enregistrant un drapeau d'erreur sur la base d'un résultat de détermination de la partie de détermination de dangerosité de renversement (233) qui détermine que lorsque les première et deuxième distances (L1, L2) indiquent le signe correspondant au côté de la région de danger de renversement (R2L, R2R), une anomalie du système est survenue.

4. Appareil de détermination de niveau de danger de renversement de véhicule (20) selon la revendication 1, dans lequel la partie de transmission de niveau de danger de renversement (23) comprend un calculateur de vitesse de déplacement (231) calculant une vitesse de déplacement du point (S), par rapport à la ligne de bordure (T1, T2), spécifiée sur la carte bidimensionnelle à partir de la distance (L1, L2) associée au signe ; et un calculateur de niveau de danger approchant (232) calculant un niveau de danger du point (S) approchant la région de danger de renversement (R2L, R2R) et s'éloignant de la région stable par pondération de la distance (L1, L2) associée au signe et de la vitesse de déplacement, et transmettant le résultat calculé comme étant le niveau de danger de renversement (H) à la partie de transmission de niveau de danger de renversement (23).

5. Appareil de détermination de niveau de danger de renversement de véhicule (20) selon la revendication 4, dans lequel le calculateur de niveau de danger approchant (232) calcule le niveau de danger approchant sous la forme d'une somme d'une valeur pondérée par multiplication du signe et de l'amplitude de la distance (L1, L2) par une première constante et une valeur pondérée par multiplication du signe et de l'amplitude de la vitesse de déplacement par une deuxième constante.

6. Appareil de détermination de niveau de danger de renversement de véhicule (20) selon la revendication 4, dans lequel la partie de transmission de niveau de danger de renversement (23) comprend en outre une partie de détermination de dangerosité de renversement (233) déterminant que lorsque la distance (L1, L2) ou le niveau de danger approchant indique le signe correspondant au côté de la région de danger de renversement (R2L, R2R), il existe une dangerosité de renversement du véhicule (11), et transmet le niveau de danger approchant lorsque la partie de détermination de dangerosité de renversement (233) a déterminé qu'il existe la dangerosité.

7. Appareil de détermination de niveau de danger de renversement de véhicule (20) selon la revendication 6, dans lequel sur la carte bidimensionnelle, des lignes de bordure (T1, T2) sont définies pour former une pluralité de régions de danger de renversement (R2L, R2R) mutuellement séparées ; lorsque le calculateur de distance (21) calcule chaque distance (L1, L2) à partir de chaque ligne de bordure (T1, T2), le calculateur de vitesse de déplacement (231) calcule chaque vitesse de déplacement à partir de chaque distance (L1, L2), le calculateur de niveau de danger approchant (232) calcule chaque niveau de danger approchant du point (S) s'éloignant de la région stable vers chaque région de danger de renversement (R2L, R2R) sur la base de chaque distance (L1, L2) et chaque vitesse de déplacement et sélectionne un niveau de danger approchant maximal (Dmax) parmi les niveaux de danger approchant calculés, la partie de détermination de dangerosité de renversement (233) détermine qu'il existe une dangerosité lorsque le niveau de danger approchant maximal (Dmax) indique le signe correspondant au côté de la région de danger de renversement (R2L, R2R), et la partie de transmission de niveau de danger de renversement (23) transmet le niveau de danger approchant maximal (Dmax).

8. Appareil de détermination de niveau de danger de renversement de véhicule (20) selon la revendication 1, comprenant en outre un calculateur de décélération cible (24) calculant une décélération cible (Gtarget) sur la base du niveau de danger de renversement (H), et un dispositif de commande de freinage (13) exécutant une commande de décélération du véhicule (11) sur la base de la décélération cible (Gtarget).

FIG.1

Y-AXIS (ROLL ANGULAR VELOCITY)

LEFT ROLLOVER DANGEROUS REGION R2L

MOVING SPEED V2

Y-AXIS INTERCEPT B1

POINT S (X1, Y1)

MOVING SPEED V1

STABLE REGION R1

TRACK P

DISTANCE L1

X-AXIS (ROLL ANGLE)

X-AXIS INTERCEPT A2

ORIGIN POINT (0, 0)

TRACK Q

X-AXIS INTERCEPT A1

DISTANCE L2

BORDER LINE T1 (LEFT ROLL)

Y-AXIS INTERCEPT B2

BORDER LINE T2 (RIGHT ROLL)

RIGHT ROLLOVER DANGEROUS REGION R2R

17

FIG.2

11 VEHICLE

12
ROLL ANGLE/
ROLL ANGULAR
VELOCITY
DETECTOR

13
BRAKE
CONTROLLER

ROLLOVER DANGER LEVEL 20
DETERMINATION UNIT

21
DISTANCE
CALCULATOR

24
TARGET
DECELERATION
CALCULATOR

22
ROLLOVER
DANGEROUSNESS
DETERMINING
PORTION

23
ROLLOVER
DANGER LEVEL
OUTPUT PORTION

25
ERROR
RECORDER

ROLLOVER DANGER LEVEL

FIG.3

```
                    ┌─────────────┐
                    │    START    │
                    └──────┬──────┘
                           │
         ┌─────────────────▼──────────────────┐
         │ DETECT ROLL ANGLE (X1) &           │ ～ S1
         │ ROLL ANGULAR VELOCITY (Y1)         │
         │ OF VEHICLE                         │
         └─────────────────┬──────────────────┘
                           │
         ┌─────────────────▼──────────────────┐
         │ CALCULATE DISTANCE L1 FROM         │
         │ BORDER LINE T1 & DISTANCE L2 FROM  │ ～ S2
         │ BORDER LINE T2                     │
         └────────────────────────────────────┘
```

$$L1 = \frac{(B1 \cdot X1 + A1 \cdot Y1 - A1 \cdot B1)}{\sqrt{(A1^2 + B1^2)}}$$

$$L2 = \frac{(-B2 \cdot X1 - A2 \cdot Y1 + A2 \cdot B2)}{\sqrt{(A2^2 + B2^2)}}$$

S3

L1 ≦ 0 AND L2 ≦ 0 ?   No

(STABLE REGION R1)   Yes

S4

L1 > 0 AND L2 ≦ 0 ?   No

(LEFT ROLLOVER DANGEROUS REGION R2L)   Yes

S5

L1 ≦ 0 AND L2 > 0 ?   No

(RIGHT ROLLOVER DANGEROUS REGION R2R)   Yes

S6  NO CONTROL

S7  ROLLOVER DANGER LEVEL H=L1

S8  ROLLOVER DANGER LEVEL H=L2

S9  CALCULATE TARGET DECELERATION $G_{target}$  $G_{target} = K \cdot H$

S11  SET ERROR FLAG

S10  CONTROL BRAKE TO HAVE TARGET DECELERATION $G_{target}$

19

FIG.4

EP 1 980 463 B1

FIG.5

11 VEHICLE

12
ROLL ANGLE/
ROLL ANGULAR
VELOCITY
DETECTOR

13
BRAKE
CONTROLLER

ROLLOVER DANGER LEVEL 20
DETERMINATION UNIT

21
DISTANCE
CALCULATOR

24
TARGET
DECELERATION
CALCULATOR

MOVING
SPEED
CALCULATOR
231

APPROACHING
DANGER
LEVEL
CALCULATOR
232

ROLLOVER
DANGEROUSNESS
DETERMINING
PORTION
233

23 ROLLOVER DANGER LEVEL
OUTPUT PORTION

ROLLOVER DANGER LEVEL

FIG.6

```
                    ┌──────────────┐
                    │    START     │
                    └──────┬───────┘
                           │
         ┌─────────────────────────────────────────┐
         │ DETECT ROLL ANGLE (X1) & ROLL ANGULAR     │～ S1
         │ VELOCITY (Y1) OF VEHICLE                   │
         └─────────────────────────────────────────┘
```

CALCULATE DISTANCE L1 FROM BORDER LINE T1 & DISTANCE L2 FROM BORDER LINE T2 ～ S2

$$L1 = \frac{(B1 \cdot X1 + A1 \cdot Y1 - A1 \cdot B1)}{\sqrt{(A1^2 + B1^2)}}$$

$$L2 = \frac{(-B2 \cdot X1 - A2 \cdot Y1 + A2 \cdot B2)}{\sqrt{(A2^2 + B2^2)}}$$

CALCULATE MOVING SPEED V1 FROM BORDER LINE T1 & MOVING SPEED V2 FOR BORDER LINE T2 ～ S12

$$V1 = \frac{d}{dt} L1$$

$$V2 = \frac{d}{dt} L2$$

CALCULATE APPROACHING DANGER LEVEL D1 & D2 INTO ROLLOVER DANGEROUS REGION R2 (R2L & R2R) ～ S13

$$D1 = p \cdot l1 + q \cdot v1$$
$$D2 = p \cdot l2 + q \cdot v2$$

SELECT MAX APPROACHING DANGER LEVEL ～ S14
$$Dmax = max (D1, D2)$$

ROLLOVER DANGER LEVEL $H = Dmax$ ～ S15

S16

$H \leqq 0 ?$ — No (ROLLOVER DANGEROUS REGION R2 (R2L & R2R))

Yes (STABLE REGION R1)

CALCULATE TARGET DECELERATION Gtarget ～ S9
Gtarget=K·H

S6 — NO CONTROL

CONTROL BRAKE TO HAVE TARGET DECELERATION Gtarget ～ S10

FIG.7A

FIG.7B

FIG.7C

FIG.7D

FIG.8

Y-AXIS (ROLL ANGULAR VELOCITY)

LEFT ROLLOVER
DANGEROUS REGION
R2L

TRACK Q

STABLE REGION R1

TRACK P

X-AXIS
(ROLL ANGLE)

BORDER LINE T1
(LEFT ROLL)

BORDER LINE
T2 (RIGHT ROLL)

RIGHT ROLLOVER
DANGEROUS REGION R2R

**EP 1 980 463 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005271697 A
- JP 2001071845 A
- JP 11011272 A
- US 6438463 B1